# EUROPEAN PATENT SPECIFICATION

(11) **EP 4 118 509 B1**
(45) Date of publication and mention of the grant of the patent: **16.04.2025**
(21) Application number: 21768676.5
(22) Date of filing: 02.03.2021
(51) Int. Cl.: A01D 34/00, G05D 1/242, G05D 1/246, G05D 1/248, G05D 1/648, G05D 105/15, G05D 107/20, G05D 109/10, G05D 111/30

(54) **SYSTEM AND METHOD FOR IMPROVED NAVIGATION OF A ROBOTIC WORK TOOL**
SYSTEM UND VERFAHREN ZUR VERBESSERTEN NAVIGATION EINES ROBOTERARBEITSWERKZEUGS
SYSTÈME ET PROCÉDÉ POUR LA NAVIGATION AMÉLIORÉE D'UN OUTIL DE TRAVAIL ROBOTISÉ

(30) Priority: 10.03.2020 SE 2050264
(43) Date of publication of application: 18.01.2023
(73) Proprietor: Husqvarna AB, 561 82 Huskvarna (SE)
(72) Inventor: HOLGERSSON, Jonas, 561 40 Huskvarna (SE); ASKENMALM, Kent, 561 34 Huskvarna (SE)
(86) International application number: PCT/SE2021/050171
(87) International publication number: WO 2021/183018

(56) References cited:
- EP-A1- 3 351 076
- EP-A1- 3 617 828
- US-A1- 2009 133 720
- US-A1- 2012 265 391
- US-A1- 2014 222 197
- US-A1- 2017 285 652
- US-A1- 2019 155 307

## Description

### TECHNICAL FIELD

This application relates to robotic work tools and in particular to a system and a method for providing an improved navigation for a robotic work tool, such as a lawnmower.

### BACKGROUND

Automated or robotic power tools such as robotic lawnmowers are becoming increasingly more popular. In a typical deployment a work area, such as a garden, the work area is enclosed by a boundary wire with the purpose of keeping the robotic lawnmower inside the work area.

The work area usually also has a number of obstacles inside it, such as rocks, trees, walls and so on. In order to avoid colliding with such objects, many robotic work tools are equipped with proximity sensors that enable the robotic work tool to detect an obstacle before reaching it and take evasive action before colliding with the obstacle. If the obstacle is not inside the work area (such as a rock just outside the boundary or a bush having its stem outside the boundary, but with branches hanging in over the boundary and into the work area), this operation results in that a part of the work area is not serviced even though no collision with the object outside the work area would ever happen.

The patent document published as EP3351076A1 discloses an automatic travelling work vehicle configured to execute work travel along a travel route is provided, the automatic travelling work vehicle includes a work travel control section configured to control work travel, work travel state detection sensors configured to detect a work travel state, at least one obstruction sensor configured to detect an obstruction disturbing travel, an obstruction detection section configured to detect an obstruction positioned within an obstruction detection area in accordance with a sensor signal from the obstruction sensor, and an obstruction detection area determination section configured to determine the obstruction detection area in accordance with the work travel state detected by the work travel state detection sensors. Further, a method for executing work travel of an automatic travelling work vehicle along a travel route is provided.

The patent document published as US20120265391A1 discloses a method of establishing an area of confinement and an autonomous robot for performing a task within the area of confinement. In one aspect, the invention can be a method of defining an area of confinement for an autonomous robot comprising: a) positioning the autonomous robot at a first location point P1, the autonomous robot comprising a location tracking unit, and recording the first location point P1 within a memory device; b) moving the autonomous robot from the first location point P1 to a plurality of location points P2-N and recording each of the plurality of location points P2-N within the memory device; and c) defining, with a central processing unit, a first closed-geometry comprising the first location point P1 and the plurality of location points P2-N as a perimeter of the area of confinement within the memory device.

Thus, there is a need for an improved manner of enabling a reliable navigation for a robotic work tool, such as a robotic lawnmower.

### SUMMARY

As will be disclosed in detail in the detailed description, the inventors have realized that a system where the robotic work tool deactivates the proximity sensors (or the input received therefrom) when being close to the boundary, the problems discussed above, may be solved.

It is therefore an object of the teachings of this application to overcome or at least reduce those problems by providing a robotic work tool system comprising a boundary enclosing a work area and a robotic work tool comprising a proximity sensor arranged to sense an obstacle, the robotic work tool being arranged to operate within the work area and the robotic work tool being configured to determine a sensed obstacle; determine a distance d to the boundary, wherein the determined distance is the distance from the sensed obstacle to the boundary; determine whether the distance d is inside a threshold distance D, and if so disregard the proximity sensor; and, if not, take evasive action to avoid the sensed obstacle as per the appended claims.

One benefit is that objects just outside the work area does not result in that parts of the work area are unnecessarily skipped, especially since the accuracy of a proximity sensor may be leading to patches of grass not being serviced by the robotic lawnmower turning prematurely. Another benefit is that false positives of detecting obstacles, such as obstacles hanging over the work area is avoided.

In one embodiment the robotic work tool system further comprises a signal generator arranged to generate a control signal, wherein the work area is enclosed by a boundary wire through which the control signal is being transmitted thereby generating a magnetic field and wherein the robotic work tool further comprises at least one magnetic field sensor for detecting the magnetic field, wherein the robotic work tool is further configured to receive magnetic sensor input from the magnetic field sensor; and determine a magnetic field magnitude based on the magnetic sensor input for determining a relative position of the robotic work tool with regards to the boundary wire, and wherein the threshold distance D is based on a threshold magnetic field magnitude.

In one embodiment the robotic work tool is further configured to reduce its speed when it is determined that the distance d is inside the distance D. In one such embodiment the robotic work tool is further configured to reduce its speed if it is determined that an object is sensed.

In one embodiment the robotic work tool further comprises a memory configured to store map data indicating a boundary for the work area and a navigation sensor, wherein the robotic work tool is further configured to receive position input from the navigation sensor; determine a position of the robotic work tool based on the position input; and wherein the threshold distance D is based on the map data. In one such embodiment the navigation sensor comprises a satellite navigation sensor.

In one embodiment the robotic work tool is further configured to receive input indicating whether the function of disregarding the proximity sensor based on a determined distance d should be enabled or disabled.

In one embodiment the robotic work tool is further configured to receive input indicating the threshold distance D.

In one embodiment the robotic work tool is a robotic lawnmower.

It is also an object of the teachings of this application to overcome the problems by providing a method for use in a robotic work tool system comprising a boundary enclosing a work area and a robotic work tool comprising a proximity sensor arranged to sense an obstacle, the robotic work tool being arranged to operate within the work area, and the method comprising: determining a sensed obstacle; determining a distance d to the boundary; determining whether the distance d is inside a threshold distance D, and if so disregarding the proximity sensor; and, if not, taking evasive action to avoid the sensed obstacle as per the appended claims.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic lawnmower according to one embodiment of the teachings herein;
Figure 1B shows a schematic view of the components of an example of a robotic work tool being a robotic lawnmower according to an example embodiment of the teachings herein;
Figure 2 shows an example of a robotic work tool system being a robotic lawnmower system according to an example embodiment of the teachings herein;
Figure 3 shows a schematic view of a robotic work tool system 200 in one embodiment illustrating various problem situations that may occur with prior art systems;
Figure 4 shows a schematic view of a robotic work tool system in one embodiment illustrating how the problem situations that may occur with prior art systems as shown by figure 3 may be overcome with a robotic work tool system according to an example embodiment of the teachings herein;
Figure 5A shows a more detailed view of the problem situation that may occur with prior art systems in relation to figure 3;
Figure 5B shows a more detailed view of how the problem situation of figure 3 is solved as discussed in relation to figure 4; and
Figure 6 shows a corresponding flowchart for a method according to an example embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools where lift detection is used and where the robotic work tool is susceptible to dust, dirt or other debris.

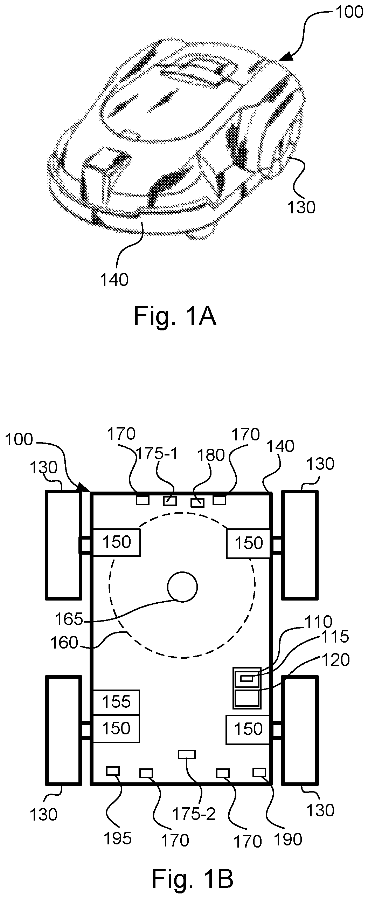

Figure 1A shows a perspective view of a robotic work tool 100, here exemplified by a robotic lawnmower 100, having a body 140 and a plurality of wheels 130 (only one pair is shown). The robotic work tool 100 may be a multi-chassis type or a mono-chassis type (as in figures 1A and 1B). A multi-chassis type comprises more than one body parts that are movable with respect to one another. A mono-chassis type comprises only one main body part.

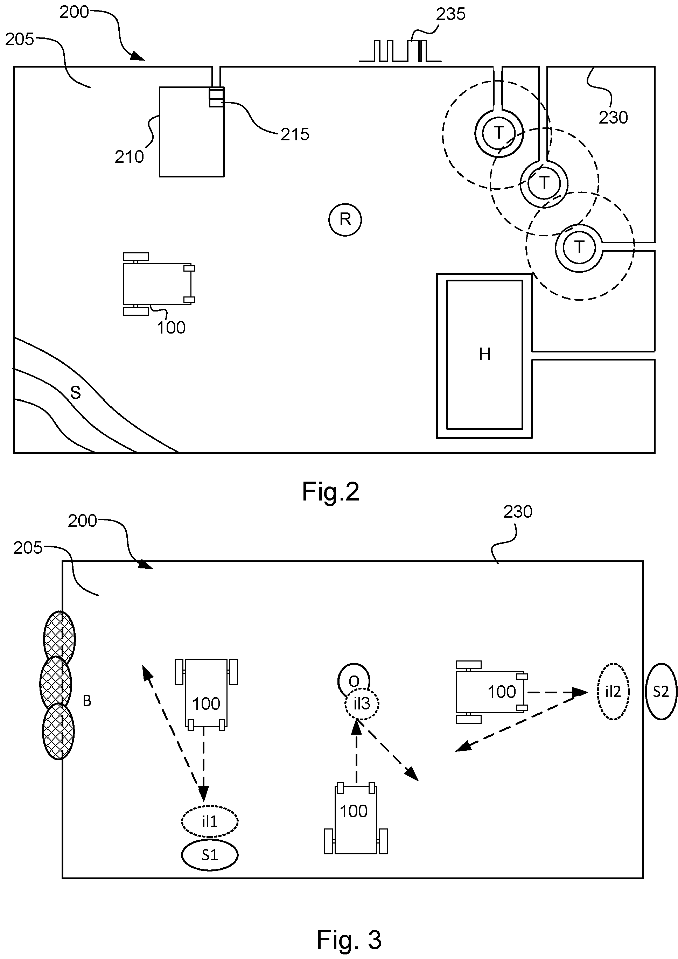

The robotic lawnmower 100 may comprise charging skids for contacting contact plates (not shown in figure 1) when docking into a charging station (not shown in figure 1, but referenced 210 in figure 2) for receiving a charging current through, and possibly also for transferring information by means of electrical communication between the charging station and the robotic lawnmower 100.

Figure 1B shows a schematic overview of the robotic work tool 100, also exemplified here by a robotic lawnmower 100. In this example embodiment the robotic lawnmower 100 is of a mono-chassis type, having a main body part 140. The main body part 140 substantially houses all components of the robotic lawnmower 100. The robotic lawnmower 100 has a plurality of wheels 130. In the exemplary embodiment of figure 1B the robotic lawnmower 100 has four wheels 130, two front wheels and two rear wheels. At least some of the wheels 130 are drivably connected to at least one electric motor 150. It should be noted that even if the description herein is focused on electric motors, combustion engines may alternatively be used, possibly in combination with an electric motor. In the example of figure 1B, each of the wheels 130 is connected to a respective electric motor. This allows for driving the wheels 130 independently of one another which, for example, enables steep turning and rotating around a geometrical center for the robotic lawnmower 100. It should be noted though that not all wheels need be connected to each a motor, but the robotic lawnmower 100 may be arranged to be navigated in different manners, for example by sharing one or several motors 150. In an embodiment where motors are shared, a gearing system may be used for providing the power to the respective wheels and for rotating the wheels in different directions. In some embodiments, one or several wheels may be uncontrolled and thus simply react to the movement of the robotic lawnmower 100.

The robotic lawnmower 100 also comprises a grass cutting device 160, such as a rotating blade 160 driven by a cutter motor 165. The grass cutting device being an example of a work tool 160 for a robotic work tool 100. The robotic lawnmower 100 also has (at least) one battery 155 for providing power to the motor(s) 150 and/or the cutter motor 165.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion of the robotic lawnmower. The controller 110 may be implemented using any suitable, available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

The robotic lawnmower 100 may further be arranged with a wireless communication interface 115 for communicating with other devices, such as a server, a personal computer or smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few.

For enabling the robotic lawnmower 100 to navigate with reference to a boundary wire emitting a magnetic field caused by a control signal transmitted through the boundary wire, the robotic lawnmower 100 is further configured to have at least one magnetic field sensor 170 arranged to detect the magnetic field (not shown) and for detecting the boundary wire and/or for receiving (and possibly also sending) information to/from a signal generator (will be discussed with reference to figure 2). In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the boundary wire. The magnitude of the magnetic field varies with the distance to the boundary wire. In principle, the magnitude decrease as the distance to the boundary wire increases. This enables the controller 110 to determine whether the robotic lawnmower 100 is close to the boundary wire and approximately how close the robotic lawnmower is to the boundary wire. As the magnetic field has a different polarity depending on which side of the boundary it is sensed, the magnitude of the magnetic field changes abruptly in the immediate vicinity of the boundary, going from the strongest magnitude in one polarity (for example positive) to the strongest polarity in the other polarity (for example negative) as the boundary wire is crossed. This enables the controller 110 to determine whether the robotic lawnmower 100 is crossing the boundary wire by sensing a change in polarity, or inside or outside an area enclosed by the boundary wire by sensing the polarity.

The robotic lawnmower 100 also comprises one or more proximity detectors 180. In the example of figure 1B, the robotic lawnmower 100 comprises one proximity sensor facing forwards for detecting proximity of objects in front of the robotic lawnmower. The robotic lawnmower 100 may also comprise one proximity sensor facing backwards for detecting proximity of objects behind the robotic lawnmower, which is especially useful when reversing. As a proximity sensor enables the robotic lawnmower to detect objects before colliding with them, it increases the longevity of the robotic lawnmower (by reducing the wear and tear inflicted by collisions) and also decrease the risk of getting stuck on any object, as the object is detected beforehand and the robotic lawnmower may take action to avoid colliding with the object. A proximity sensor 180 is a sensor able to detect the presence of nearby objects without any physical contact. A proximity sensor often emits an electromagnetic field or a beam of electromagnetic radiation (infrared, for instance), and looks for changes in the field or return signal. A proximity sensor 180 may be implemented as an optical proximity sensor, such as a camera utilizing image analysis, a laser range finder, infrared sensor, or as an audio sensor such as sonar, ultrasonic sensor, or as a radio frequency based sensor such as radar.

The robotic lawnmower 100 may also comprise one or more collision detectors 175. In the example of figure 1B, the robotic lawnmower 100 comprises a front collision detector 175-1, enabling the robotic lawnmower 100 to detect a collision while moving in a forwards direction, i.e. a forwards collision, and a rear collision detector 175-2, enabling the robotic lawnmower 100 to detect a collision while moving in a reverse direction, i.e. a reverse collision.

In some embodiments, the robotic lawnmower 100 further comprises one or more sensors for deduced navigation 195. Examples of sensors for deduced reckoning are odometers, accelerometers, gyroscopes, and compasses to mention a few examples. In the example of figure 1B, the robotic lawnmower 100 may comprise two odometers, being wheel turn counters, enabling the robotic lawnmower 100 to count the number of wheel turns executed by two opposite wheels and thereby both determine a distance travelled (equalling number of wheel turns multiplied with the diameter of the wheel), and also any directional changes (by noting differences in wheel turns between the two wheels). In the example of figure 1B, the robotic lawnmower 100 may further comprise an accelerometer enabling the robotic lawnmower 100 to not only determine directional changes, but also changes in altitude and current inclination.

In one embodiment, the robotic lawnmower 100 may further comprise at least one navigation sensor, such as a beacon navigation sensor and/or a satellite navigation sensor 190. The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon. The satellite navigation sensor may be a GPS (Global Positioning System) device, a RTK (Real-Time Kinematic) device or other Global Navigation Satellite System (GNSS) device.

In embodiments, where the robotic lawnmower 100 is arranged with a navigation sensor, the magnetic sensors 170 are optional. In such systems, and also other systems utilizing a boundary wire, the robotic lawnmower may be arranged to determine a distance to the boundary of the work area by comparing a current location determined through the navigation sensor, to a stored location of the boundary. In such systems the boundary is virtual and corresponds to positions or locations stored in the memory 120 of the robotic lawnmower 100.

Figure 2 shows a schematic view of a robotic work tool system 200 in one embodiment. The schematic view is not to scale. The robotic work tool system 200 comprises a robotic work tool 100. As with figures 1A and 1B, the robotic work tool is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within a work area.

The robotic work tool system 200 may also comprises charging station 210 which in some embodiments is arranged with a signal generator 215 and a boundary wire 230.

The signal generator is arranged to generate a control signal 235 to be transmitted through the boundary wire 230. To perform this, the signal generator is arranged with a controller and memory module. The controller and memory module may also be the controller and memory module of the charging station.

The boundary wire 230 is arranged to enclose a work area 205, in which the robotic lawnmower 100 is supposed to serve. The control signal 235 transmitted through the boundary wire 230 causes a magnetic field (not shown) to be emitted.

In one embodiment the control signal 235 is a sinusoid periodic current signal. In one embodiment the control signal 235 is a pulsed current signal comprising a periodic train of pulses. In one embodiment the control signal 235 is a coded signal, such as a CDMA signal.

As an electrical signal is transmitted through a wire, such as the control signal 235 being transmitted through the boundary wire 230, a magnetic field is generated. The magnetic field may be detected using field sensors, such as Hall sensors. A sensor - in its simplest form - is a coil surrounding a conductive core, such as a ferrite core. The amplitude of the sensed magnetic field is proportional to the derivate of the control signal. A large variation (fast and/or of great magnitude) results in a high amplitude or magnitude for the sensed magnetic field. As discussed above, the magnitude of the magnetic field varies with the distance to the boundary wire 230. The variations are sensed and compared to a reference signal or pattern of variations in order to identify and thereby reliably sense the control signal.

The work area 205 is in this application exemplified as a garden, but can also be other work areas as would be understood. The garden contains a number of obstacles (O), exemplified herein by a slope (S), a rock (R), a number (3) of trees (T) and a house structure (H). The trees are marked both with respect to their trunks (filled lines) and the extension of their foliage (dashed lines).

In one embodiment the robotic work tool is arranged or configured to traverse and operate in a work area that is not essentially flat, but contains terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in a work area that contains obstacles that are not easily discerned from the ground. Examples of such are grass or moss covered rocks, roots or other obstacles that are close to ground and of a similar colour or texture as the ground. The robotic work tool is also or alternatively arranged or configured to traverse and operate in a work area that contains obstacles that are overhanging, i.e. obstacles that may not be detectable from the ground up, such as low hanging branches of trees (T) or bushes. Such a garden is thus not simply a flat lawn to be mowed or similar, but a work area of unpredictable structure and characteristics. The work area 205 exemplified with referenced to figure 2, may thus be such a non-uniform work area as disclosed in this paragraph that the robotic work tool is arranged to traverse and/or operate in.

As can be seen in figure 2, the boundary wire 230 has been laid so that so-called islands are formed around the trees' trunks and the house (H). This requires that more boundary wire is used, than if the work area was without such obstacles. It should be noted that any distances between wires are greatly exaggerated in this application in order to make the distances visible in the drawings. In a real-life installations the boundary wire is usually laid so that there is not distance between the wire going out and the wire coming back (distance = 0). This allows the robotic work tool 100 to cross any such sections (indicated by the dashed arrow in figure 2) as the magnetic field emitted by the wire going out cancels out the magnetic field emitted by the wire coming back.

Figure 3 shows a schematic view of a robotic work tool system 200 in one embodiment illustrating various problem situations that may occur with prior art systems. The schematic view is not to scale. In this view, the work area 205 comprises different obstacles than the work area 205 of figure 2. Figure 3 shows two stones, one stone S1 inside the work area 205 and close to the boundary wire 230, and one stone S2 outside the work area. Figure 3 also shows a bush B along the edge of the boundary wire 230. As is indicated the bush is actually located outside the work area but has branches hanging in over the work area 205.

As the robotic lawnmower approaches the first stone, that is inside the work area and close to the boundary wire 230, the proximity sensor 180 senses an imaginary or sensed location il1 for the first stone S1 (indicated by a dotted representation of the stone S1). As the robotic lawnmower 100 approaches the imaginary location il1 as determined by the proximity sensor 180, the robotic lawnmower 100 will take evasive action and turn away to avoid a collision as indicated by the dashed line. This will result in that the lawn is not cut in proximity to the stone S1. A similar example is illustrated with reference to the second stone S2. However, in this example the robotic lawnmower 100 will take evasive action as it approaches an imaginary location il2 for the second stone S2 as determined by the proximity sensor 180 even though the second stone is not inside the work area 205 resulting in that a part of the work area is not being serviced. In both cases, the result is that the robotic lawnmower 100 does not cut as close to an object as possible resulting in parts of the work area not being serviced. A similar problem to the problem of the second stone S2 arises when the robotic lawnmower 100 approaches the bush B. as the bush has branches hanging over the boundary wire 230, the bush may be determined as being inside the boundary wire, when in fact it is outside the boundary wire, resulting in that a part of the work area 205 is not being serviced completely unnecessarily as the robotic lawnmower 100 will take evasive action before reaching the boundary wire even though a collision with the second stone would never happen..

In figure 3 a further object O is also shown and as the robotic lawnmower 100 approaches an imaginary or sensed location il3 of the object, the robotic lawnmower 100 will take evasive action.

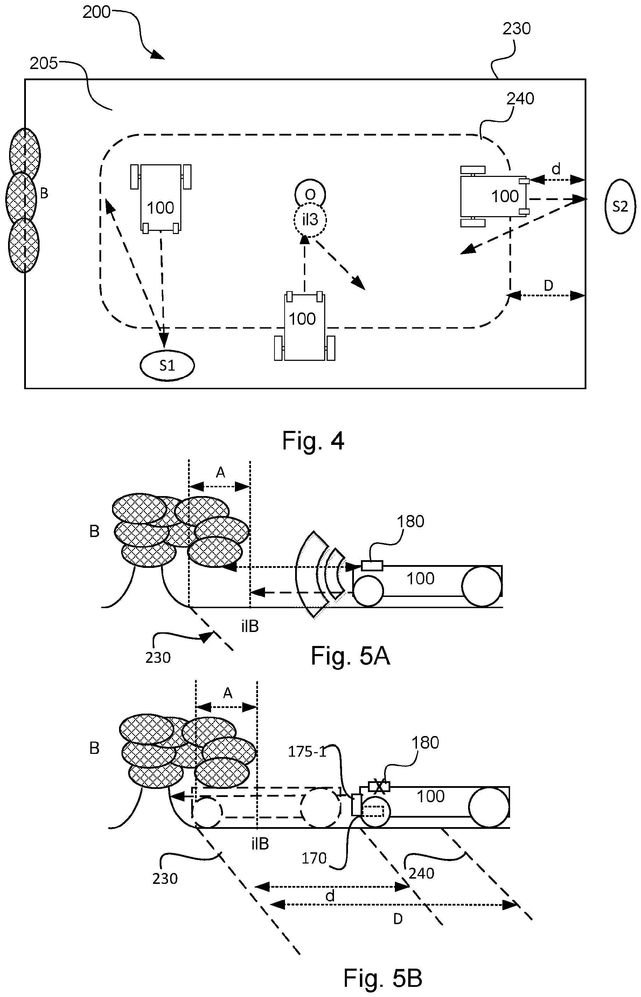

Figure 4 shows a schematic view of a robotic work tool system 200 in one embodiment illustrating how the problem situations that may occur with prior art systems as shown by figure 3 may be overcome with a robotic work tool system 200 as per the present teachings. The schematic view is not to scale. In this view, a threshold signal level 240 of the magnitude of the sensed magnetic field indicating a distance D to the boundary wire 230 is illustrated by a dashed line. In the embodiments disclosed in figure 4, the robotic lawnmower 100 is configured to determine a distance to the boundary wire 230 and determine whether the distance d is below (or within) the distance D corresponding to the threshold signal level of the magnitude of the sensed magnetic field. If so, the robotic lawnmower 100 is configured to disregard the input from the proximity sensor 180 and thus the imaginary locations and simply rely on the magnetic sensors 170. The magnetic sensors 170 have a higher accuracy and are also not affected by branches hanging over the boundary wire 230. As such, the robotic lawnmower 100 will proceed up to the boundary wire 230 in the case of approaching the second stone S2 thereby preventing that a part of the work area 205 is not serviced and thus solving the problem as discussed in relation to figure 3.

As can be seen in figure 4, there is no longer any sensing of the stone S1 received from the proximity sensor, which would lead the robotic lawnmower 100 to collide with the stone S1. In order to reduce the impact of such a collision the robotic lawnmower 100 is configured to reduce its speed when it is determined that the distance d is below (or within) the distance D corresponding to the threshold signal level of the magnitude of the sensed magnetic field. This will not prevent a collision, but will reduce the effect of such a collision thereby also reducing the wear and tear of the robotic lawnmower 100 leading to an increased lifetime of the robotic lawnmower.

In one such embodiment, the robotic lawnmower is configured to ignore the proximity sensor only in the aspect that the robotic lawnmower will not take evasive action (such as turn away) based on the input from the proximity sensor. The robotic lawnmower may, however, be configured to reduce its speed based on the proximity sensor, so that the speed is only reduced when the input received from the proximity sensor actually indicates that there is something to collide with. This also reduces the wear and tear of the robotic lawnmower but maintains most of the efficiency of the robotic lawnmower by not slowing down unnecessarily.

As is also shown in figure 4, the robotic lawnmower 100 is configured to determine the imaginary or sensed location il3 of the object O as determined by receiving input from the proximity sensor 180, as the distance d determined would be over or outside the distance D corresponding to the threshold signal level of the magnitude of the sensed magnetic field. In case the imaginary or sensed location il3 of the object O does not correspond accurately to the actual location of the object, it may result in that a part of the work area 205 is not serviced. However, in this case, it will be in order to avoid a collision, and thus not unnecessarily.

In one embodiment, the distance determined d is the distance of the robotic lawnmower to the boundary wire 230, as in the example of figure 4.

In one such embodiment, the distance determined d is determined based on the magnitude of the magnetic field sensed by a magnetic field sensor 170. In one alternative or additional such embodiment, the distance determined d is determined based on determining a location of the robotic lawnmower 100 and comparing the location determined to a stored location of the boundary using alternative navigation sensors.

In one embodiment, the distance determined d is the sensed distance from the obstacle to the boundary 230. In one such embodiment, the distance determined d is determined based on input received from the proximity sensor 180. This enables the robotic lawnmower 100 to determine that the sensed object is too close to the boundary wire for trusting the accuracy of the proximity sensor 180 and instead relying on the magnetic sensor 170 for avoiding that apart is unnecessarily not serviced.

In one embodiment the distance is a two-fold distance being a combination of both the distance from the robotic work tool to the boundary 230 and from the sensed object to the boundary 230, wherein it is determined if any or both of the distances falls within a respective threshold distance D.

Figure 5A shows a more detailed view of the problem situation that may occur with prior art systems in relation to the bush B of figure 3. As the robotic lawnmower 100 approaches the bush B, it will determine an imaginary or sensed location ilB for the bush, and take evasive action prematurely and unnecessarily as discussed in relation to figure 3 resulting in that the part indicated A is left unserved. Even though the robotic lawnmower 100 would have been able to navigate under the hanging branches of the bush B.

Figure 5B shows a more detailed view of how the problem situation is solved as discussed above in relation to the bush B of figure 4. The robotic lawnmower 100 determines a distance d and compares it to the distance D indicating the signal level corresponding to a threshold distance to the boundary wire 230 (the threshold distance D). As the determined distance d is below or within the threshold distance D, the robotic lawnmower 100 deactivates the proximity sensor 180 or ignores the input received from the proximity sensor 180 (as indicated by the proximity sensor 180 being crossed out in figure 5B) and instead relies on the magnetic sensor 170 for determining how far to go, and possibly the collision sensor 175-1 to avoid getting stuck due to a collision.

As indicated in figure 5B by the dashed representation of the robotic lawnmower 100, the robotic lawnmower 100 is thereby enabled to also service the part A of the work area, thereby solving the problem discussed herein and as shown in figure 3 and more precisely in figure 5A.

In one embodiment, the robotic lawnmower 100 is configured to receive input indicating whether the function of deactivating the proximity sensor based on a determined distance should be enabled or disabled. The input may be received from a user through a user interface, not shown explicitly but considered to be part of the communication interface 115 as it enables communication with external entities.

In one such embodiment, the input is received internally due to a determination that the robotic lawnmower is in a specific area. The specific area may be seen as being inside the threshold distance to the boundary wire. The specific area may also or alternatively be a user-defined area (either in the map or by laying the boundary wire) indicating for example an area with lots of bushes or low hanging trees.

In such embodiments, the robotic lawnmower 100 is further configured to determine that it is within a specific area and in response thereto either enable or disable the function of deactivating the proximity sensor based on a determined distance.

In one embodiment, the robotic lawnmower 100 is configured to receive input indicating the size or extent of the area where the proximity sensor possibly should be disabled, i.e. input indicating the distance D. The input may be received from a user through a user interface, not shown explicitly but considered to be part of the communication interface 115 as it enables communication with external entities.

In one such embodiment, the area is indicated by receiving a setting for the distance D. In one alternative or additional embodiment, the area is indicated by receiving input corresponding to or defining the actual borders of the area, for example through the use of a map application in the user interface or in the user interface of a cooperating device.

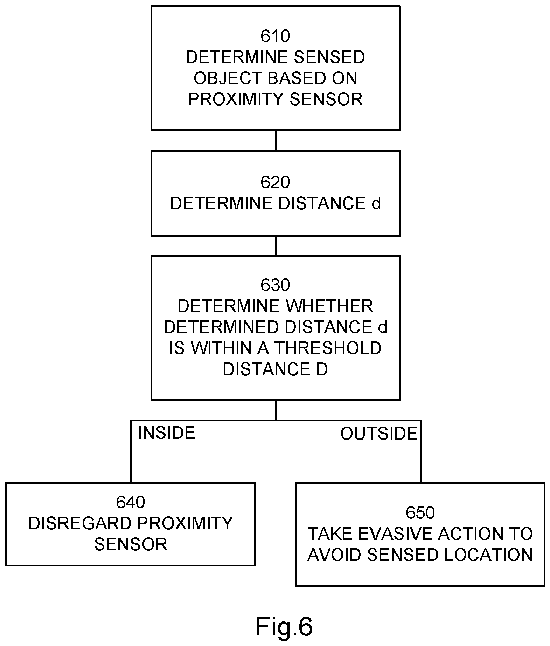

Figure 6 shows a flowchart of a general method according to the teachings herein. As discussed above, the robotic lawnmower 100 is configured to determine 610 a sensed or imaginary location il1, il2, il3, ilB of an obstacle S1, S2, O, B. It should be noted that it is not essential to determine the exact location of a sensed object, and that it may suffice to determine a distance to, i.e. the presence of, the sensed object. The robotic work tool 100 is also configured to determine 620 a distance d and to determine 630 whether the distance d is inside a threshold distance D. If it is determined that the determined distance d is within the threshold distance D, then the robotic work tool 100 is configured to disregard 640 the proximity sensor 180 and the sensed location il1, il2, il3, ilB. The proximity sensor 180 may be disregarded by being deactivated thereby not determining the sensed location or the proximity sensor may be disregarded by not utilizing the sensed location.

If it is determined that the determined distance d is outside the threshold distance D, then the robotic work tool 100 is configured to take 650 evasive action as the robotic lawnmower 100 approaches the sensed location il1, il2, il3, ilB. In one embodiment the sensed location is determined only if it is determined that the proximity sensor is not to be disregarded.

In one embodiment the determined distance d is the distance from the robotic lawnmower 100 to the boundary wire 230. In an alternative or additional embodiment the determined distance d is the distance from the sensed location il1, il2, il3, ilB, i.e. from the sensed object, to the boundary wire 230.

In an embodiment where the robotic lawnmower system 200 comprises a signal generator 215 arranged to generate a control signal 235, wherein the work area 205 is enclosed by a boundary wire 230 through which the control signal 235 is being transmitted thereby generating a magnetic field, the threshold distance D is based on a threshold magnetic field magnitude corresponding to a distance from the boundary wire 230. And the robotic lawnmower 100 is further configured to receive magnetic sensor input from the magnetic field sensor 170; and determine a magnetic field magnitude based on the magnetic sensor input for determining a relative position of the robotic lawnmower 100 with regards to the boundary wire 235 for enabling the robotic lawnmower 100 to navigate in relation to the boundary wire 230. The magnetic field magnitude sensed may also be utilized to determine a distance of the robotic lawnmower 100 to the boundary wire to be used as the determined distance d.

In an alternative or additional embodiment wherein the robotic lawnmower 100 further comprises a navigation sensor 190, 195 and a memory 120 configured to store map data representing the work area 205 and especially indicating a boundary 230 for the work area 205, the robotic lawnmower 100 is configured to navigate in relation to the boundary by determining a position based on navigation sensor input and comparing this to the stored map data. In such an embodiment the threshold distance D is based on the map data and represents a distance to the boundary. In one such embodiment the navigation sensor comprises a satellite navigation sensor 190 as discussed in relation to figure 1B.

In one embodiment, the robotic lawnmower 100 is further configured to receive input indicating whether the function of disregarding the proximity sensor 180 based on a determined distance d should be enabled or disabled.

## Claims

1. A robotic work tool system (200) comprising a boundary (230) enclosing a work area (205) and a robotic work tool (100) comprising a proximity sensor (180) arranged to sense an obstacle (S1, S2, O, B), the robotic work tool (100) being arranged to operate within the work area (205) and the robotic work tool (100) being configured to
determine (610) a sensed obstacle (S1, S2, O, B)
determine (620) a distance (d) to the boundary (230);
determine (630) whether the distance (d) is inside a threshold distance (D), and if so
disregard (640) the proximity sensor (180) and not take (650) evasive action to avoid the sensed obstacle (S1, S2, O, B); and, if not,
take (650) evasive action to avoid the sensed obstacle (S1, S2, O, B), **characterized in that** the determined distance (d) is the distance from the sensed obstacle (S1, S2, O, B) to the boundary (230).

2. The robotic work tool system (200) according to claim 1, further comprising a signal generator (215) arranged to generate a control signal (235), wherein the work area (205) is enclosed by a boundary wire (230) through which the control signal (235) is being transmitted thereby generating a magnetic field and wherein the robotic work tool (100) further comprises at least one magnetic field sensor (170) for detecting the magnetic field, wherein the robotic work tool (100) is further configured to
receive magnetic sensor input from the magnetic field sensor (170); and
determine a magnetic field magnitude based on the magnetic sensor input for determining a relative position of the robotic work tool (100) with regards to the boundary wire (235), and wherein
the threshold distance (D) is based on a threshold magnetic field magnitude.

3. The robotic work tool system (200) according to any preceding claim, wherein the robotic work tool (100) is further configured to reduce its speed when it is determined that the distance (d) is inside the distance (D).

4. The robotic work tool system (200) according to claim 3, wherein the robotic work tool (100) is further configured to reduce its speed if it is determined that an object is sensed.

5. The robotic work tool system (200) according to any preceding claim, wherein the robotic work tool (100) further comprises a memory (120) configured to store map data indicating a boundary (230) for the work area (205) and a navigation sensor (190, 195), wherein the robotic work tool (100) is further configured to
receive position input from the navigation sensor (190, 195);
determine a position of the robotic work tool (100) based on the position input; and
wherein the threshold distance (D) is based on the map data.

6. The robotic work tool system (200) according to claim 5, wherein the navigation sensor (190, 195) comprises a satellite navigation sensor (190).

7. The robotic work tool system (200) according to any preceding claim, wherein the robotic work tool (100) is further configured to receive input indicating whether the function of disregarding the proximity sensor (180) based on a determined distance (d) should be enabled or disabled.

8. The robotic work tool system (200) according to any preceding claim, wherein the robotic work tool (100) is further configured to receive input indicating the threshold distance (D).

9. The robotic work tool system (200) according to any preceding claim wherein the robotic work tool (100) is a robotic lawnmower (100).

10. A method for use in a robotic work tool system (200) comprising a boundary (230) enclosing a work area (205) and a robotic work tool (100) comprising a proximity sensor (180) arranged to sense an obstacle (S1, S2, O, B), the robotic work tool (100) being arranged to operate within the work area (205), and the method comprising:
determining (610) a sensed obstacle (S1, S2, O, B)
determining (620) a distance (d) to the boundary (230);
determining (630) whether the distance (d) is inside a threshold distance (D), and if so
disregarding (640) the proximity sensor (180) not taking (650) evasive action to avoid the sensed obstacle (S1, S2, O, B); and, if not,
taking (650) evasive action to avoid the sensed obstacle (S1, S2, O, B) ), **characterized in that** the determined distance (d) is the distance from the sensed obstacle (S1, S2, O, B) to the boundary (230).

## Patentansprüche

1. Roboterarbeitswerkzeugsystem (200), umfassend eine Begrenzung (230), die einen Arbeitsbereich (205) umschließt, und ein Roboterarbeitswerkzeug (100), umfassend einen Näherungssensor (180), der angeordnet ist, um ein Hindernis (S1, S2, O, B) zu erfassen, wobei das Roboterarbeitswerkzeug (100) angeordnet ist, um innerhalb des Arbeitsbereichs (205) in Betrieb zu sein, und das Roboterarbeitswerkzeug (100) konfiguriert ist zum:
Bestimmen (610) eines erfassten Hindernisses (S1, S2, O, B)
Bestimmen (620) einer Distanz (d) zu der Begrenzung (230);
Bestimmen (630), ob die Distanz (d) sich innerhalb einer Schwellendistanz (D) befindet, und falls ja,
Ignorieren (640) des Näherungssensors (180) und kein Durchführen (650) eines Ausweichmanövers, um das erfasste Hindernis (S1, S2, O, B) zu vermeiden; und falls nicht,
Durchführen (650) eines Ausweichmanövers, um das erfasste Hindernis (S1, S2, O, B) zu vermeiden, **dadurch gekennzeichnet, dass** die bestimmte Distanz (d) die Distanz von dem erfassten Hindernis (S1, S2, O, B) zu der Begrenzung (230) ist.

2. Roboterarbeitswerkzeugsystem (200) nach Anspruch 1, ferner umfassend einen Signalgenerator (215), der angeordnet ist, um ein Steuersignal (235) zu erzeugen, wobei der Arbeitsbereich (205) von einem Begrenzungsdraht (230) umschlossen ist, durch den das Steuersignal (235) übertragen wird, wodurch ein Magnetfeld erzeugt wird, und wobei das Roboterarbeitswerkzeug (100) ferner mindestens einen Magnetfeldsensor (170) zum Erkennen des Magnetfelds umfasst, wobei das Roboterarbeitswerkzeug (100) ferner konfiguriert ist zum:
Empfangen einer magnetischen Sensoreingabe von dem Magnetfeldsensor (170);
und Bestimmen einer Magnetfeldstärke basierend auf der Magnetsensoreingabe zum Bestimmen einer relativen Position des Roboterarbeitswerkzeugs (100) in Bezug auf den Begrenzungsdraht (235), und wobei
die Schwellendistanz (D) auf einer Schwellenmagnetfeldstärke basiert.

3. Roboterarbeitswerkzeugsystem (200) nach einem der vorstehenden Ansprüche, wobei das Roboterarbeitswerkzeug (100) ferner konfiguriert ist, um seine Geschwindigkeit zu verringern, wenn bestimmt wird, dass die Distanz (d) innerhalb der Distanz (D) liegt.

4. Roboterarbeitswerkzeugsystem (200) nach Anspruch 3, wobei das Roboterarbeitswerkzeug (100) ferner konfiguriert ist, um seine Geschwindigkeit zu verringern, wenn bestimmt wird, dass ein Objekt erfasst wird.

5. Roboterarbeitswerkzeugsystem (200) nach einem der vorstehenden Ansprüche, wobei das Roboterarbeitswerkzeug (100) ferner einen Speicher (120), der konfiguriert ist, um Kartendaten zu speichern, die eine Begrenzung (230) für den Arbeitsbereich (205) angeben, und einen Navigationssensor (190, 195) umfasst, wobei das Roboterarbeitswerkzeug (100) ferner konfiguriert ist zum:
Empfangen einer Positionseingabe von dem Navigationssensor (190, 195);
Bestimmen einer Position des Roboterarbeitswerkzeugs (100) basierend auf der Positionseingabe; und
wobei die Schwellendistanz (D) auf den Kartendaten basiert.

6. Roboterarbeitswerkzeugsystem (200) nach Anspruch 5, wobei der Navigationssensor (190, 195) einen Satellitennavigationssensor (190) umfasst.

7. Roboterarbeitswerkzeugsystem (200) nach einem der vorstehenden Ansprüche, wobei das Roboterarbeitswerkzeug (100) ferner konfiguriert ist, um eine Eingabe zu empfangen, die angibt, ob die Funktion zum Ignorieren des Näherungssensors (180) basierend auf einer bestimmten Distanz (d) aktiviert oder deaktiviert werden sollte.

8. Roboterarbeitswerkzeugsystem (200) nach einem der vorstehenden Ansprüche, wobei das Roboterarbeitswerkzeug (100) ferner konfiguriert ist, um eine Eingabe zu empfangen, die die Schwellendistanz (D) angibt.

9. Roboterarbeitswerkzeugsystem (200) nach einem der vorstehenden Ansprüche, wobei das Roboterarbeitswerkzeug (100) ein Roboterrasenmäher (100) ist.

10. Verfahren zum Verwenden eines Roboterarbeitswerkzeugsystems (200), umfassend eine Begrenzung (230), die einen Arbeitsbereich (205) umschließt, und ein Roboterarbeitswerkzeug (100), umfassend einen Näherungssensor (180), der angeordnet ist, um ein Hindernis (S1, S2, O, B) zu erfassen, wobei das Roboterarbeitswerkzeug (100) angeordnet ist, um innerhalb des Arbeitsbereichs (205) in Betrieb zu sein, und das Verfahren umfasst:
Bestimmen (610) eines erfassten Hindernisses (S1, S2, O, B)
Bestimmen (620) einer Distanz (d) zu der Begrenzung (230);
Bestimmen (630), ob die Distanz (d) sich innerhalb einer Schwellendistanz (D) befindet, und falls ja,
Ignorieren (640) des Näherungssensors (180) und kein Durchführen (650) eines Ausweichmanövers, um das erfasste Hindernis (S1, S2, O, B) zu vermeiden; und falls nicht,
Durchführen (650) eines Ausweichmanövers, um das erfasste Hindernis (S1, S2, O, B) zu vermeiden, **dadurch gekennzeichnet, dass** die bestimmte Distanz (d) die Distanz von dem erfassten Hindernis (S1, S2, O, B) zu der Begrenzung (230) ist.

## Revendications

1. Système d'outil de travail robotisé (200) comprenant une délimitation (230) entourant une zone de travail (205) et un outil de travail robotisé (100) comprenant un capteur de proximité (180) conçu pour détecter un obstacle (S1, S2, O, B), l'outil de travail robotisé (100) étant conçu pour fonctionner à l'intérieur de la zone de travail (205) et l'outil de travail robotisé (100) étant configuré pour
déterminer (610) un obstacle détecté (S1, S2, O, B)
déterminer (620) une distance (d) par rapport à la délimitation (230) ;
déterminer (630) si la distance (d) se situe à l'intérieur d'une distance seuil (D), et dans l'affirmative
ne pas tenir compte (640) du capteur de proximité (180) et ne pas prendre (650) de mesures d'évitement pour éviter l'obstacle détecté (S1, S2, O, B) ; et, dans le cas contraire,
prendre (650) des mesures d'évitement pour éviter l'obstacle détecté (S1, S2, O, B), **caractérisé en ce que** la distance déterminée (d) est la distance entre l'obstacle détecté (S1, S2, O, B) et la délimitation (230).

2. Système d'outil de travail robotisé (200) selon la revendication 1, comprenant en outre un générateur de signaux (215) conçu pour générer un signal de commande (235), dans lequel la zone de travail (205) est entourée d'un fil de délimitation (230) à travers lequel le signal de commande (235) est transmis, générant ainsi un champ magnétique et dans lequel l'outil de travail robotisé (100) comprend en outre au moins un capteur de champ magnétique (170) permettant de détecter le champ magnétique, dans lequel l'outil de travail robotisé (100) est en outre configuré pour
recevoir une entrée de capteur magnétique provenant du capteur de champ magnétique (170) ; et
déterminer une amplitude de champ magnétique sur la base de l'entrée de capteur magnétique permettant de déterminer une position relative de l'outil de travail robotisé (100) par rapport au fil de délimitation (235), et dans lequel
la distance seuil (D) est basée sur une amplitude de champ magnétique seuil.

3. Système d'outil de travail robotisé (200) selon l'une quelconque revendication précédente, dans lequel l'outil de travail robotisé (100) est en outre configuré pour réduire sa vitesse lorsqu'il est déterminé que la distance (d) se situe à l'intérieur de la distance (D).

4. Système d'outil de travail robotisé (200) selon la revendication 3, dans lequel l'outil de travail robotisé (100) est en outre configuré pour réduire sa vitesse s'il est déterminé qu'un objet est détecté.

5. Système d'outil de travail robotisé (200) selon l'une quelconque revendication précédente, dans lequel l'outil de travail robotisé (100) comprend en outre une mémoire (120) configurée pour stocker des données cartographiques indiquant une délimitation (230) pour la zone de travail (205) et un capteur de navigation (190, 195), dans lequel l'outil de travail robotisé (100) est en outre configuré pour
recevoir une entrée de position provenant du capteur de navigation (190, 195) ;
déterminer une position de l'outil de travail robotisé (100) sur la base de l'entrée de position ; et
dans lequel la distance seuil (D) est basée sur les données cartographiques.

6. Système d'outil de travail robotisé (200) selon la revendication 5, dans lequel le capteur de navigation (190, 195) comprend un capteur de navigation par satellite (190).

7. Système d'outil de travail robotisé (200) selon l'une quelconque revendication précédente, dans lequel l'outil de travail robotisé (100) est en outre configuré pour recevoir une entrée indiquant si la fonction consistant à ignorer le capteur de proximité (180) sur la base d'une distance déterminée (d) doit être activée ou désactivée.

8. Système d'outil de travail robotisé (200) selon l'une quelconque revendication précédente, dans lequel l'outil de travail robotisé (100) est en outre configuré pour recevoir une entrée indiquant la distance seuil (D).

9. Système d'outil de travail robotisé (200) selon l'une quelconque revendication précédente, dans lequel l'outil de travail robotisé (100) est une tondeuse à gazon robotisée (100).

10. Procédé destiné à être utilisé dans un système d'outil de travail robotisé (200) comprenant une délimitation (230) entourant une zone de travail (205) et un outil de travail robotisé (100) comprenant un capteur de proximité (180) conçu pour détecter un obstacle (S1, S2, O, B), l'outil de travail robotisé (100) étant conçu pour fonctionner à l'intérieur de la zone de travail (205), et le procédé comprenant :
la détermination (610) d'un obstacle détecté (S1, S2, O, B)
la détermination (620) d'une distance (d) par rapport à la délimitation (230) ;
la détermination (630) quant à savoir si la distance (d) se trouve à l'intérieur d'une distance seuil (D), et dans l'affirmative
le fait de ne pas tenir compte (640) du capteur de proximité (180) ne prenant pas (650) de mesures d'évitement pour éviter l'obstacle détecté (S1, S2, O, B) ; et, dans le cas contraire,
la prise (650) de mesures d'évitement pour éviter l'obstacle détecté (S1, S2, O, B)), **caractérisé en ce que** la distance déterminée (d) est la distance entre l'obstacle détecté (S1, S2, O, B) et la délimitation (230).
